# FASCICULE DE BREVET EUROPEEN

(11) **EP 4 039 538 B1**
(45) Date de publication et mention de la délivrance du brevet: **30.07.2025**
(21) Numéro de dépôt: 22155130.2
(22) Date de dépôt: 04.02.2022
(51) Int. Cl.: B60N 3/00

(54) **EQUIPEMENT DE CONFORT POUR UN VÉHICULE DE TRANSPORT PUBLIC, COMPRENANT UNE TABLE EN PORTE-À-FAUX**
KOMFORTAUSSTATTUNG FÜR EIN ÖFFENTLICHES TRANSPORTFAHRZEUG, DIE EINEN FREITRAGENDEN TISCH UMFASST
COMFORT DEVICE FOR A PUBLIC TRANSPORT VEHICLE, COMPRISING A CANTILEVERED TABLE

(30) Priorité: 05.02.2021 FR 2101132
(43) Date de publication de la demande: 10.08.2022
(73) Titulaire: ALSTOM Holdings, 93400 Saint-Ouen-sur-Seine (FR); SNCF Voyageurs, 93200 Saint-Denis (FR)
(72) Inventeur: LEYENDECKER, Nicolas, 67160 DRACHENBRONN-BIRLENBACH (FR)
(74) Mandataire: Plasseraud IP

(56) Documents cités:
- EP-A1- 3 456 603
- DE-A1- 102019 209 658
- US-A1- 2016 039 524

## Description

La présente invention concerne un équipement de confort pour un véhicule de transport public, comprenant une table en porte-à-faux.

Une telle table en porte-à-faux est conformée de sorte qu'un espace libre, défini sous cette table, soit dépourvu de pied de table, afin notamment de permettre à une personne à mobilité réduite de s'installer à cette table de manière confortable, notamment sans qu'un pied de table ne vienne gêner un fauteuil roulant ou les jambes de la personne.

On connait déjà, dans l'état de la technique, de telles tables en porte-à-faux. Toutefois, de telles tables ne sont généralement pas satisfaisantes, en ce qu'elles comportent, afin de présenter une bonne tenue mécanique, un pied latéral arqué qui réduit le volume de l'espace libre sous la table. Les documents DE102019209658, EP3456603 et US2016039524 divulguent des tables et tablettes pour véhicules.

L'invention a notamment pour but d'améliorer la situation, en proposant un équipement de confort comprenant une table en porte-à-faux, dont le volume de l'espace libre défini sous la table est optimisé.

A cet effet, l'invention a notamment pour objet un équipement de confort selon la revendication 1.

Le premier montant, initialement destiné à porter la barre de maintien, est fixé au plateau de fixation au-dessus de la traverse de support, de sorte que la tenue mécanique de la table est améliorée. Cette tenue mécanique est alors satisfaisante pour une utilisation normale de l'équipement de confort, et cela sans nécessiter de pied latéral arqué.

Il est ainsi possible d'utiliser un pied latéral moins encombrant que dans l'état de la technique, voire ne pas utiliser de pied, et ainsi libérer un espace libre plus important sous la table.

Un équipement de confort selon l'invention peut présenter en outre l'une ou plusieurs des caractéristiques suivantes, prises seules ou selon toutes combinaisons techniquement envisageables.
- L'équipement de confort comporte un plateau intermédiaire de fixation, destiné à être fixé à l'élément structurel de la salle de passagers, chaque premier organe de fixation supérieur destiné à être fixé au plateau intermédiaire, de sorte que le premier montant est fixé indirectement à l'élément structurel, par l'intermédiaire du plateau intermédiaire de fixation.
- L'équipement de confort comporte au moins un second organe de fixation pour la fixation du plateau intermédiaire de fixation à l'élément structurel de la salle de passager, au moins l'un, parmi cet au moins un second organe de fixation étant un second organe de fixation supérieur agencé au-dessus de la barre de préhension dans la direction verticale.
- L'équipement de confort comporte au moins cinq seconds organes de fixation, notamment deux seconds organes de fixation inférieurs agencés à proximité de la traverse de support, deux seconds organes de fixation intermédiaires agencés dans la direction verticale entre la traverse de support et le premier organe de fixation supérieur, et le second organe de fixation supérieur.
- Le premier montant comporte au moins un premier organe de fixation inférieur agencé sous la traverse de support dans la direction verticale Z, de préférence deux premiers organes de fixation inférieurs, avantageusement agencés sensiblement à une même hauteur dans la direction verticale, pour la fixation directe ou indirecte à l'élément structurel.
- L'équipement de confort comporte deux premiers organes de fixation supérieurs, avantageusement agencés sensiblement à une même hauteur dans la direction verticale.
- Chaque premier organe de fixation supérieur est agencé, dans la direction verticale, plus proche de la barre de préhension que de la traverse de support.
- L'équipement de confort est dépourvu, lorsqu'il est fixé à l'élément structurel, de tout élément dans un espace libre défini verticalement entre la traverse de support et un plancher de la salle de passagers, l'espace libre s'étendant, dans la direction transversale, sur au moins 85% de la dimension du cadre de support dans cette direction transversale.
- L'équipement de confort comporte un pied de support, destiné à être fixé à l'élément structurel de la salle, et portant le cadre de support à son extrémité de liaison, à une hauteur inférieure à celle de ce cadre de support dans la direction verticale.
- Le cadre de support porte au moins une planche de table, de préférence deux planches de table, chaque planche de table étant de préférence reliée à la traverse de support de manière fixe ou par une liaison pivot, et chaque planche de table étant de préférence formée par deux pans articulés entre eux de manière à être mobiles entre une position rabattue l'un sur l'autre et une position déployée l'un dans le prolongement de l'autre.

L'invention concerne également un véhicule de transport public, notamment ferroviaire, comportant au moins une salle de passagers comportant au moins un élément structurel, caractérisé en ce qu'il comporte au moins un élément de confort tel que défini précédemment fixé à l'élément structurel.

Différents aspects et avantages de l'invention seront décrits plus en détail dans la description qui va suivre, donnée uniquement à titre d'exemple illustratif et non limitatif, et faite en se référant aux figures annexées, parmi lesquelles :
- [Fig 1] La figure 1 est une vue en perspective d'un équipement de confort selon un exemple de mode de réalisation de l'invention, équipant un véhicule de transport public,

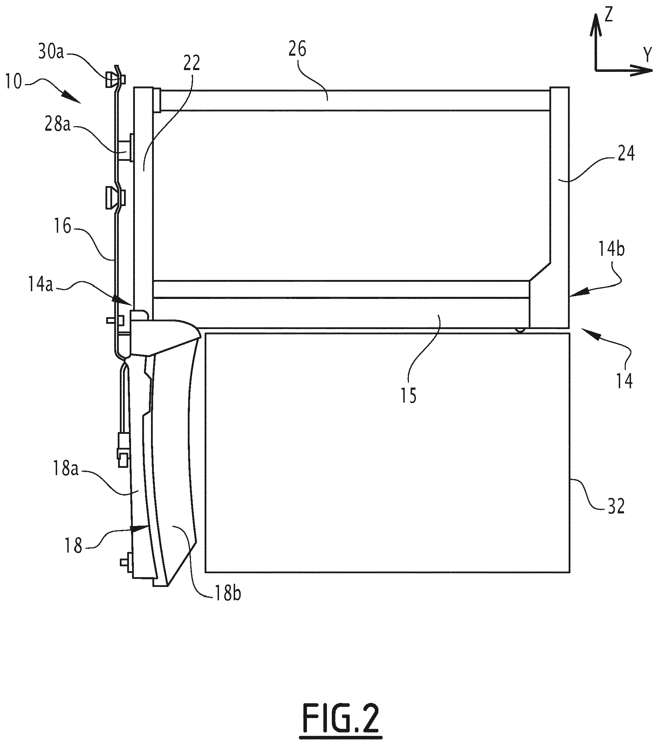

- [Fig 2] La figure 2 est une vue de face de l'équipement de confort de la figure 1,
- [Fig 3] La figure 3 est une vue en perspective de l'élément de confort de la figure 1, montré plus en détail,

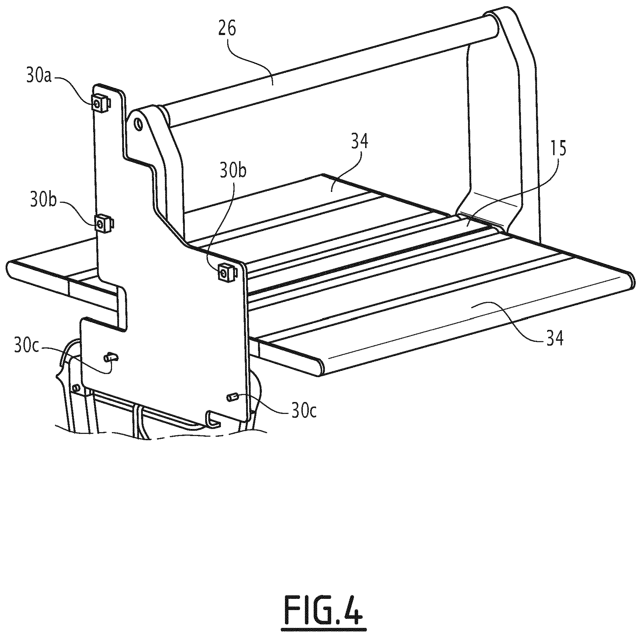

- [Fig 4] La figure 4 est une vue en perspective de l'élément de confort de la figure 1, montré sous un autre angle de vue.

On a représenté, sur les figures, un équipement de confort 10 destiné à équiper une salle de passagers de véhicule de transport public, par exemple de véhicule ferroviaire.

Dans la présente description, on définira une direction verticale Z. Les termes « dessus », « dessous », « supérieur », et « inférieur » présentent leur sens usuel dans cette direction verticale Z.

La salle de passagers comporte au moins un élément structurel 12, notamment une paroi structurelle latérale 12. Par « élément structurel », on entend un élément participant à la structure du véhicule, c'est-à-dire présentant une tenue mécanique suffisante pour porter divers autres éléments sans se déformer.

L'élément de confort 10 est destiné à être porté par la paroi structurelle latérale 12.

L'élément de confort 10 comprend un cadre 14 de support de table, s'étendant notamment parallèlement à une direction transversale Y perpendiculaire à la direction verticale Z, entre une extrémité de liaison 14a destinée à être reliée à la paroi structurelle latérale 12, et une extrémité libre 14b.

Le cadre de support 14 comporte une traverse de support 15 s'étendant parallèlement la direction transversale Y, un premier montant 22 relié à la traverse de support 15 à l'extrémité de liaison 14a, et de préférence un second mondant 24 relié à la traverse de support 15 à l'extrémité libre 14b. Les premier 22 et second 24 montants s'étendent notamment parallèlement à la direction verticale Z.

Ainsi, la traverse de support 15 s'étend entre les premier 22 et second 24 montants, à proximité d'extrémités inférieures de ces premier 22 et second 24 montants.

Le cadre de support 14 comporte par ailleurs une barre de préhension 26 s'étendant parallèlement à la direction transversale Y entre les premier 22 et second 24 montants, au-dessus de la traverse de support 15. La barre de préhension 26 est de préférence reliée à des extrémités supérieures des premier 22 et second 24 montants.

L'extrémité de liaison 14a du cadre de support 14 est fixée à la paroi structurelle latérale 12, soit directement, soit par l'intermédiaire d'un plateau intermédiaire de fixation 16 et d'un pied de support 18. Le pied de support 18 s'étend, parallèlement à la direction verticale Z, au-dessus d'un plancher de la salle de passagers.

Le premier montant 22 est agencé au-dessus du pied de support 18, dans la continuité de ce pied de support 18 dans la direction verticale Z.

Le plateau intermédiaire de fixation 16 présente, dans l'exemple décrit, une forme générale plane, s'étendant dans un plan perpendiculaire à la direction transversale Y.

En variante, le plateau intermédiaire de fixation 16 pourrait présenter au moins une partie non plane, ou pourrait présenter plusieurs parties planes, parallèles ou non, séparées par des épaulements.

Le plateau intermédiaire de fixation 16 est conçu dans un matériau suffisamment rigide et robuste pour tenir le cadre de support 14, par exemple en acier.

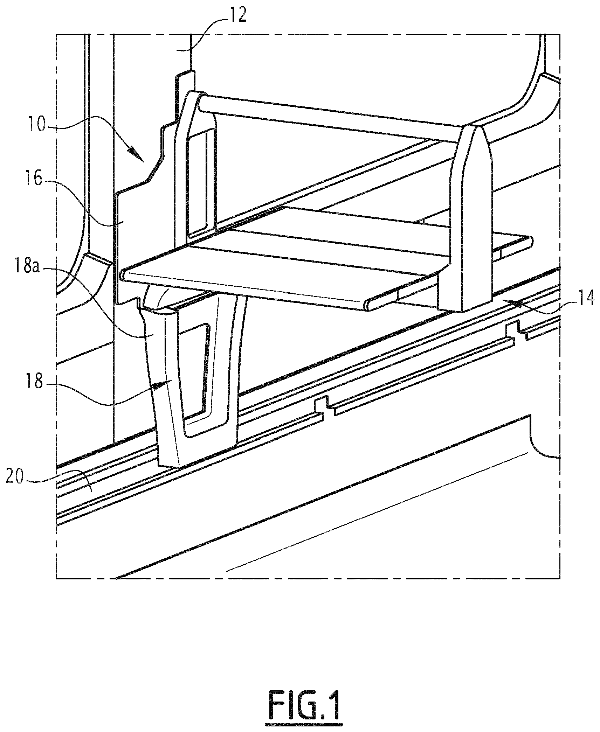

Le pied de support 18 comporte une partie structurelle 18a, visible sur la figure 1, plaquée contre la paroi structurelle 12, et fixée, dans sa partie inférieure, à un rail de fixation 20 lui-même fixé à la paroi structurelle 12. La fixation d'un tel pied de support 18 par l'intermédiaire d'un rail de fixation est connue en soi.

Le pied de support 18 comporte également une partie de garniture 18b recouvrant la partie structurelle 18a afin de la masquer. La partie de garniture 18b peut, dans une variante de réalisation, comporter une poubelle.

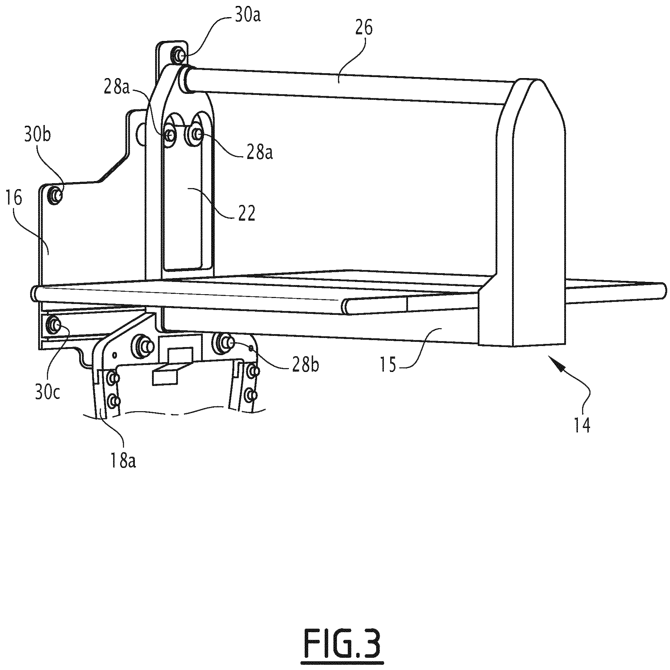

Comme cela est notamment représenté sur la figure 3, le pied de support 18, plus particulièrement sa partie structurelle 18a, est fixé au premier montant 22, en dessous de la traverse de support 15, par exemple par vissage.

Le premier montant 22 est fixé au plateau intermédiaire 16 au moyen d'au moins un premier organe de fixation 28a, 28b. Plus particulièrement, dans l'exemple décrit, le premier montant 22 est fixé au plateau intermédiaire 16 au moyen d'au moins un premier organe de fixation supérieur 28a et d'au moins un premier organe de fixation inférieur 28b.

Chaque premier organe de fixation 28a, 28b est par exemple une vis comportant une tige filetée destinée à être reçue dans un alésage taraudé.

Chaque premier organe de fixation supérieur 28a est agencé, dans la direction verticale Z, entre la traverse de support 15 et la barre de préhension 26. Dans l'exemple décrit, le cadre de support 14 comporte deux premiers organes de fixation supérieurs 28a, agencés sensiblement à une même hauteur dans la direction verticale Z, de préférence à proximité de l'extrémité supérieure du premier support 22.

Chaque premier organe de fixation supérieur 28a est avantageusement, dans la direction verticale Z, plus proche de la barre de préhension 26 que de la traverse de support 15.

Le ou les premiers organes de fixation supérieurs 28a permettent, en fixant le premier support 22 dans sa partie supérieure, de maintenir efficacement le cadre de support 14. Le ou les organes de fixation inférieurs 28b permettent de renforcer l'efficacité de ce maintien du cadre de support 14.

On notera que l'équipement de confort 10 pourrait en variante comporter davantage de premiers organes de fixation supérieurs 28a et inférieurs 28b.

Par ailleurs, chaque premier organe de fixation inférieur 28b est agencé, dans la direction verticale Z, en dessous de la traverse de support 15. Dans l'exemple décrit, le cadre de support 14 comporte deux premiers organes de fixation inférieurs 28b, agencés sensiblement à une même hauteur dans la direction verticale Z, de préférence à proximité de l'extrémité inférieure du premier support 22.

Le plateau intermédiaire de fixation 16 est par ailleurs fixé à la paroi latérale structurelle 12, au moyen d'au moins un second organe de fixation 30a, 30b, 30c.

Chaque second organe de fixation 30a, 30b, 30c est par exemple une vis comportant une tige filetée destinée à être reçue dans un alésage taraudé.

Plus particulièrement, dans l'exemple décrit, l'équipement de confort 10 comporte au moins un second organe de fixation supérieur 30a, agencé, dans la direction verticale Z, au-dessus de chaque premier organe de fixation supérieur 28a. De préférence, chaque second organe de fixation supérieur 30a est agencé, dans la direction verticale Z, à une hauteur supérieure à celle de la barre de préhension 26.

L'équipement de confort 10 comporte par ailleurs au moins un second organe de fixation intermédiaire 30b, agencé, dans la direction verticale 2, entre la traverse de support 25 et chaque premier organe de fixation supérieur 28a. Par exemple, l'équipement de confort 10 comporte deux organes de fixation intermédiaires 30b, agencés sensiblement à une même hauteur dans la direction verticale Z, ou à des hauteurs proches. De préférence, chaque second organe de fixation intermédiaire 30b est agencé, dans la direction verticale Z, à une hauteur proche de celle de la traverse de support 15.

L'équipement de confort 10 comporte également au moins un second organe de fixation inférieur 30c, agencé, dans la direction verticale 2, en dessous de la traverse de support 15. Par exemple, l'équipement de confort 10 comporte deux organes de fixation inférieurs 30c agencés sensiblement à une même hauteur dans la direction verticale Z, ou à des hauteurs proches.

L'invention permet, en utilisant le premier support 22 initialement destiné à porter la barre de préhension 26, de fixer l'équipement de confort 10 en hauteur grâces aux premiers 28a et second 30a organes de fixation supérieurs. Ces points de fixation supplémentaires permettent d'assurer la tenue mécanique de l'équipement de confort 10, sans nécessiter de pied de support supplémentaire. En outre, grâce à l'invention, le pied de support 18 ne nécessite pas de présenter une forme arquée s'étendant sous la traverse de support 25.

Il en résulte que l'équipement de confort 10 est dépourvu de tout élément dans un espace libre 32 défini verticalement entre la traverse de support 25 et le plancher de la salle de passagers. Cet espace libre 32 s'étend, dans la direction transversale, sur au moins 85% de la dimension du cadre de support 14 dans cette direction transversale Y, c'est-à-dire de la distance, dans la direction transversale Y, entre l'extrémité de liaison 14a et l'extrémité libre 14b. En d'autres termes, l'équipement de confort 10 s'étend en porte-à-faux depuis la paroi structurelle 12, au-dessus du plancher. Dans le cas où l'équipement de confort 10 est dépourvu de pied de support 18, l'espace libre 32 s'étend sur 100% de la dimension du cadre de support 14 dans la direction transversale Y.

Il est à noter que le cadre de support 14 porte de manière classique au moins une planche de table 34, de préférence deux planches de table 34.

Chaque planche de table est de préférence reliée à la traverse de support 15 par une liaison pivot, et chaque planche de table est de préférence formée par deux pans articulés entre eux de manière à être mobiles entre une position rabattue l'un sur l'autre et une position déployée l'un dans le prolongement de l'autre. En variante, la planche de table est formée par une ou plusieurs planches horizontales fixes. Une telle planche de table formée par des pans rabattables ou par une ou plusieurs planches horizontales fixes sont connues en soi.

Ainsi, l'élément de confort 10 forme une table lorsque les planches de table 34 sont déployées, ou montées fixes.

On notera que l'invention n'est pas limitée au mode de réalisation précédemment décrit, mais pourrait présenter diverses variantes complémentaires.

## Revendications

1. Equipement de confort (10) pour une salle de passagers de véhicule de transport public, comprenant un cadre (14) de support de table s'étendant en porte-à-faux dans une direction transversale (Y) perpendiculaire à une direction verticale (Z), entre une extrémité de liaison (14a) destinée à être reliée à un élément structurel (12) de la salle de passagers, et une extrémité libre (14b), dans lequel :
- le cadre de support (14) comporte un premier montant (22) à son extrémité de liaison (14a), une traverse de support (15) reliée au premier montant (22) et s'étendant parallèlement à la direction transversale (Y),
- le premier montant (22) comporte au moins un premier organe de fixation supérieur (28a) pour la fixation de ce premier montant (22) à l'élément structurel (12),
**caractérisé en ce que** le cadre de support (14) comporte une barre de préhension (26) portée par le premier montant (22) et s'étendant parallèlement à la direction transversale (Y) et au-dessus de la traverse de support (15),.

2. Equipement de confort (10) selon la revendication 1, comportant un plateau intermédiaire de fixation (16), destiné à être fixé à l'élément structurel (12) de la salle de passagers, chaque premier organe de fixation supérieur (28a) étant destiné à être fixé au plateau intermédiaire (16), de sorte que le premier montant (22) est fixé indirectement à l'élément structurel (12), par l'intermédiaire du plateau intermédiaire de fixation (16).

3. Equipement de confort (10) selon la revendication 2, comportant au moins un second organe de fixation (30a, 30b, 30c) pour la fixation du plateau intermédiaire de fixation (16) à l'élément structurel (12) de la salle de passager, au moins l'un, parmi cet au moins un second organe de fixation (30a, 30b, 30c), étant un second organe de fixation supérieur (30a) agencé au-dessus de la barre de préhension (26) dans la direction verticale (Z).

4. Equipement de confort (10) selon l'une quelconque des revendications précédentes, dans lequel le premier montant (22) comporte au moins un premier organe de fixation inférieur (28b) agencé sous la traverse de support (15) dans la direction verticale (Z), de préférence deux premiers organes de fixation inférieurs (28b), avantageusement agencés sensiblement à une même hauteur dans la direction verticale (Z), pour la fixation directe ou indirecte à l'élément structurel (12).

5. Equipement de confort (10) selon l'une quelconque des revendications précédentes, comportant deux premiers organes de fixation supérieurs (28a), avantageusement agencés sensiblement à une même hauteur dans la direction verticale (Z).

6. Equipement de confort (10) selon l'une quelconque des revendications précédentes, dans lequel chaque premier organe de fixation supérieur (28a) est agencé, dans la direction verticale, plus proche de la barre de préhension (26) que de la traverse de support (15).

7. Equipement de confort (10) selon l'une quelconque des revendications précédentes, l'équipement de confort (10) étant dépourvu, lorsqu'il est fixé à l'élément structurel (12), de tout élément dans un espace libre (32) défini verticalement entre la traverse de support (15) et un plancher de la salle de passagers, l'espace libre (32) s'étendant, dans la direction transversale (Y), sur au moins 85% de la dimension du cadre de support (14) dans cette direction transversale (Y).

8. Equipement de confort (10) selon l'une quelconque des revendications précédentes, comportant un pied de support (18), destiné à être fixé à l'élément structurel (12) de la salle, et portant le cadre de support (14) à son extrémité de liaison (14a), à une hauteur inférieure à celle de ce cadre de support (14) dans la direction verticale (Z).

9. Equipement de confort (10) selon l'une quelconque des revendications précédentes, dans lequel le cadre de support (14) porte au moins une planche de table (34), de préférence deux planches de table (34), chaque planche de table étant de préférence reliée à la traverse de support (15) de manière fixe ou par une liaison pivot, et chaque planche de table (34) étant de préférence formée par deux pans articulés entre eux de manière à être mobiles entre une position rabattue l'un sur l'autre et une position déployée l'un dans le prolongement de l'autre.

10. Véhicule de transport public, notamment ferroviaire, comportant au moins une salle de passagers comportant au moins un élément structurel (12), **caractérisé en ce qu'**il comporte au moins un élément de confort (10) selon l'une quelconque des revendications précédentes, fixé à l'élément structurel (12).

## Patentansprüche

1. Komfortvorrichtung (10) für einen Fahrgastraum eines öffentlichen Verkehrsmittels, umfassend einen Tischstützrahmen (14), der sich in einer Querrichtung (Y) freitragend senkrecht zu einer vertikalen Richtung (Z) zwischen einem Verbindungsende (14a), das mit einem Strukturelement (12) des Fahrgastraums verbunden ist, und einem freien Ende (14b) erstreckt, wobei
- der Stützrahmen (14) an seinem Verbindungsende (14a) eine erste Stütze (22) umfasst und einen mit der ersten Stütze (22) verbundenen und parallel zur Querrichtung (Y) verlaufenden Querträger (15) aufweist,
- die erste Stütze (22) wenigstens ein erstes oberes Befestigungselement (28a) zur Befestigung dieser ersten Stütze (22) an dem Strukturelement (12) aufweist, **dadurch gekennzeichnet, dass** der Stützrahmen (14) eine von der ersten Stütze (22) getragene und parallel zur Querrichtung (Y) und oberhalb des Querträgers (15) verlaufende Griffstange (26) aufweist.

2. Komfortvorrichtung (10) nach Anspruch 1, umfassend eine Zwischenbefestigungsplatte (16), die dazu bestimmt ist, an dem Strukturelement (12) des Fahrgastraums befestigt zu sein, wobei jedes erste obere Befestigungselement (28a) zur Befestigung an der Zwischenplatte (16) bestimmt ist, so dass die erste Stütze (22) über die Zwischenbefestigungsplatte (16) indirekt an dem Strukturelement (12) befestigt ist.

3. Komfortvorrichtung (10) nach Anspruch 2, umfassend wenigstens ein zweites Befestigungselement (30a, 30b, 30c) zur Befestigung der Zwischenbefestigungsplatte (16) an dem Strukturelement (12) des Fahrgastraums, wobei wenigstens eines aus dem wenigstens einen zweiten Befestigungselement (30a, 30b, 30c) ein zweites oberes Befestigungselement (30a) ist, das in vertikaler Richtung (Z) oberhalb der Haltegriffstange (26) angeordnet ist.

4. Komfortvorrichtung (10) nach einem der vorhergehenden Ansprüche, wobei die erste Stütze (22) wenigstens ein erstes unteres Befestigungselement (28b) aufweist, das in vertikaler Richtung (Z) unterhalb des Querträgers (15) angeordnet ist, bevorzugt zwei erste untere Befestigungselemente (28b), die vorteilhafterweise in vertikaler Richtung (Z) im Wesentlichen auf gleicher Höhe angeordnet sind, zur direkten oder indirekten Befestigung an dem Strukturelement (12).

5. Komfortvorrichtung (10) nach einem der vorhergehenden Ansprüche, umfassend zwei erste obere Befestigungselementen (28a), die vorteilhafterweise in vertikaler Richtung (Z) im Wesentlichen auf gleicher Höhe angeordnet sind.

6. Komfortvorrichtung (10) nach einem der vorhergehenden Ansprüche, wobei jedes erste obere Befestigungselement (28a) in vertikaler Richtung näher an der Haltegriffstange (26) als an dem Querträger (15) angeordnet ist.

7. Komfortvorrichtung (10) nach einem der vorhergehenden Ansprüche, wobei die Komfortvorrichtung (10) in der an dem Strukturelement (12) befestigten Stellung frei von Elementen in einem vertikal zwischen dem Querträger (15) und einem Boden des Fahrgastraums definierten Freiraum (32) ist, wobei sich der Freiraum (32) in Querrichtung (Y) über wenigstens 85 % der Abmessung des Stützrahmens (14) in dieser Querrichtung (Y) erstreckt.

8. Komfortvorrichtung (10) nach einem der vorhergehenden Ansprüche, umfassend einen Stützfuß (18), der zur Befestigung an dem Strukturelement (12) des Raumes bestimmt ist und an seinem Verbindungsende (14a) den Stützrahmen (14) trägt, in einer Höhe, die geringer ist als die des Stützrahmens (14) in vertikaler Richtung (Z).

9. Komfortvorrichtung (10) nach einem der vorhergehenden Ansprüche, wobei der Stützrahmen (14) wenigstens eine Tischplatte (34), bevorzugt zwei Tischplatten (34) trägt, wobei jede Tischplatte bevorzugt fest oder schwenkbar mit dem Querträger (15) verbunden ist und jede Tischplatte (34) bevorzugt aus zwei miteinander gelenkig verbundenen Flügeln gebildet ist, die zwischen einer aufeinanderklappbaren Stellung und einer ineinander geschobenen Stellung bewegbar sind.

10. Öffentliches Verkehrsmittel, insbesondere Schienenfahrzeug, umfassend wenigstens einen Fahrgastraum, der wenigstens ein Strukturelement (12) aufweist, **dadurch gekennzeichnet, dass** es wenigstens eine Komfortvorrichtung (10) nach einem der vorhergehenden Ansprüche aufweist, die an dem Strukturelement (12) befestigt ist.

## Claims

1. Comfort equipment (10) for a passenger compartment of a public transport vehicle, comprising a table support frame (14) extending in cantilevered fashion in a transverse direction (Y) perpendicular to a vertical direction (Z), between a connecting end (14a) intended to be connected to a structural element (12) of the passenger compartment, and a free end (14b), wherein:
- the support frame (14) comprises a first post (22) at its connecting end (14a), a supporting cross member (15) connected to the first post (22) and extending parallel to the transverse direction (Y),
- the first post (22) comprises at least one first upper securing member (28a) for securing this first post (22) to the structural element (12),
**characterised in that** the support frame (14) comprises a grip bar (26) supported by the first post (22) and extending parallel to the transverse direction (Y) and above the supporting cross member (15).

2. Comfort equipment (10) according to claim 1, comprising an intermediate mounting plate (16), intended to be secured to the structural element (12) of the passenger compartment, each first upper securing member (28a) being intended to be secured to the intermediate plate (16), such that the first post (22) is indirectly secured to the structural element (12), via the intermediate mounting plate (16).

3. Comfort equipment (10) according to claim 2, comprising at least one second securing member (30a, 30b, 30c) for securing the intermediate mounting plate (16) to the structural element (12) of the passenger compartment, at least one, of at least one second securing member (30a, 30b, 30c), being a second upper securing member (30a) arranged above the grip bar (26) in the vertical direction (Z).

4. Comfort equipment (10) according to any one of the preceding claims, wherein the first post (22) comprises at least one first lower securing member (28b) arranged under the supporting cross member (15) in the vertical direction (Z), preferably two first lower securing members (28b), advantageously arranged substantially at the same height in the vertical direction (Z), for direct or indirect attachment to the structural element (12).

5. Comfort equipment (10) according to any one of the preceding claims, comprising two first upper securing members (28a), advantageously arranged substantially at the same height in the vertical direction (Z).

6. Comfort equipment (10) according to any one of the preceding claims, wherein each first upper securing member (28a) is arranged, in the vertical direction, closer to the grip bar (26) than to the supporting cross member (15).

7. Comfort equipment (10) according to any one of the preceding claims, the comfort equipment (10) being devoid, when secured to the structural element (12), of any element in a free space (32) defined vertically between the supporting cross member (15) and a floor of the passenger compartment, the free space (32) extending, in the transverse direction (Y), over at least 85% of the dimension of the support frame (14) in this transverse direction (Y).

8. Comfort equipment (10) according to any one of the preceding claims, comprising a support leg (18), intended to be secured to the structural element (12) of the compartment, and supporting the support frame (14) at its connecting end (14a), at a height lower than that of this support frame (14) in the vertical direction (Z).

9. Comfort equipment (10) according to any one of the preceding claims, wherein the support frame (14) supports at least one table top (34), preferably two table tops (34), each table top being preferably connected to the supporting cross member (15) fixedly or by a pivoting connector, and each table top (34) preferably formed by two panels hinged together so as to be movable between a folded position on top of each other and a deployed position one in extension of the other.

10. Public transport vehicle, in particular rail, comprising at least one passenger compartment comprising at least one structural element (12), **characterised in that** it comprises at least one comfort element (10) according to any one of the preceding claims, secured to the structural element (12).
